# EUROPÄISCHE PATENTANMELDUNG

(11) **EP 2 058 103 A1**
(43) Veröffentlichungstag der Anmeldung: **13.05.2009**
(21) Anmeldenummer: 08019243.8
(22) Anmeldetag: 04.11.2008
(51) Int. Cl.: B29C 39/00, B29C 41/08, B29C 45/16, B29C 37/00, A47K 3/02

(54) **Sanitärgegenstand und Verfahren zu seiner Herstellung**

(30) Priorität: 07.11.2007 DE 102007052923
(71) Anmelder: DECS GmbH, 99610 Sömmerda (DE)
(72) Erfinder: Krämer, Ulrich, 99610 Sömmerda (DE)
(74) Vertreter: Stern, Wolfgang

(57) **Zusammenfassung**

Die Erfindung betrifft einen Sanitärgegenstand, wie zum Beispiel Badewanne, Duschbecken, Waschtisch oder dergleichen, bei welchem zumindest die Gebrauchsseite (2) aus einer Kunststoffschicht besteht. Weiterhin betrifft die Erfindung verfahren zur Herstellung derartiger Sanitärgegenstände. Erfindungswesentlich ist, dass die Gebrauchsschicht aus einem reaktiven, semiflexiblen PU-System gebildet ist, welches vorteilhaft selbstheilende Eigenschaften aufweist. Die Herstellung der semiflexiblen Gebrauchsschicht kann durch Gießen oder Aufsprühen des reaktiven PU-Systems erfolgen, wodurch bei der Gestaltung der Sanitärgegenstände eine große Formvariabilität erreicht wird.

## Beschreibung

Die Erfindung betrifft einen Sanitärgegenstand, wie zum Beispiel Badewanne, Duschbecken, Waschtisch oder dergleichen, bei welchem zumindest die Gebrauchsseite aus einer Kunststoffschicht besteht. Weiterhin betrifft die Erfindung Verfahren zur Herstellung derartiger Sanitärgegenstände.

### Stand der Technik

Insbesondere als Alternative zu emaillierten Wannen aus Stahl ist es bekannt, Badewannen aus Kunststoffen herzustellen. In der DE 37 12 959 C2 werden dazu unterschiedliche Herstellungstechnologien genannt bzw. vorgeschlagen. Bei einer weit verbreiteten Herstellungsmethode werden im Vakuum-Tiefziehverfahren Acrylplatten entsprechend der Innenform der Badewanne verformt. Auf diese Innenschale wird dann in einer geschlossenen Form im Reaktionsgussverfahren eine verstärkende Außenschicht/Tragschicht aus Polyurethanschaum aufgebracht. Es kommt dabei zu einer Verbindung beider Schichten. Durch das Tiefziehverfahren bedingt, lassen sich jedoch zum Beispiel von der Grundform einer Badewanne abweichende Formgebungen nur begrenzt realisieren. So kommt es beim Tiefziehen der Innenschale zu deutlichen Wandstärkeunterschieden, und dadurch an kritischen Stellen, wie Ecken oder Rundungen, zu stark reduzierten Wandstärken, welche in Bezug auf die mechanische Belastbarkeit sowie hinsichtlich der Gewährleistung einer einwandfreien Oberflächenqualität problematisch sind.

Es ist weiterhin allgemein bekannt, die durch Tiefziehen einer Kunststoffplatte oder Kunststofffolie erzeugte Innenschale durch Aufsprühen von reaktivem Polyurethanschaum oder durch Auflaminieren von Glasfaserkunststoff mit einer Tragschicht zu versehen.

Bei einer weiteren bekannten Methode wird in eine der Badewanne entsprechende Negativform nach dem als In-Mould-Coating bekannten Verfahren durch Sprühen eines reaktiven Kunststoffes die spätere, die Gebrauchsfläche bildende Innenschicht der Wanne aufgebracht. Es hat sich jedoch gezeigt, dass diese unter einem Millimeter starke Gebrauchsschicht den Ansprüchen hinsichtlich der mechanischen Beanspruchbarkeit nur bedingt genügt.

Alle bekannten Sanitärgegenstände sowie die Verfahren zu ihrer Herstellung haben gemeinsam, dass sie hinsichtlich einer variableren Formgebung, zum Beispiel dem Ausbilden von Ablagen oder ergonomischen Ausformungen, nicht befriedigen können. Ein entscheidender Nachteil des bekannten Standes der Technik ist weiterhin die geringe Widerstandsfähigkeit gegen mechanische Einwirkungen, insbesondere gegen so genannte Impactbelastungen, wie sie im Sanitärbereich durch herabfallend harte Gegenstände, wie zum Beispiel Kosmetikbehältnisse, immer wieder auftreten können.

### Aufgabenstellung

Es ist daher Aufgabe der Erfindung, einen gattungsgemäßen Sanitärgegenstand sowie Verfahren zu seiner Herstellung anzugeben, mit denen Formen realisierbar sind, welche von einer klassischen Muldenform deutlich abweichen können. Dabei soll die Gebrauchsfläche der Sanitärgegenstände eine gegenüber dem bekannten Stand der Technik deutlich erhöhte mechanische Belastbarkeit aufweisen.

Diese Aufgabe wird durch einen Sanitärgegenstand mit den Merkmalen des Schutzanspruchs 1 und mit den Verfahren nach den Schutzansprüchen 16 bis 18 gelöst.

Die Vorteile der Erfindungen bestehen insbesondere darin, dass durch das Erzeugen der Gebrauchsschicht aus einem reaktiven, gieß- oder sprühfähigen, semiflexiblen PU-System eine mechanisch äußerst widerstandsfähige Oberfläche erzielt wird, welche sogar so genannte selbstheilende Eigenschaften hinsichtlich mechanischer Einwirkungen aufweisen kann. Durch die semiflexiblen Eigenschaften der Gebrauchsschicht sind bei der Montage von abzudichtenden Einbauteilen, wie Armaturen, Zu- oder Abläufen keine zusätzlichen Dichtungen erforderlich, d.h. die Gebrauchsschicht selbst hat diese dichtenden Eigenschaften. Die dichtenden Eigenschaften machen auch bei der Montage von Duschwänden auf Duschbecken oder Badewannen den Einsatz von Dichtungen überflüssig. Insbesondere bei der Realisierung von Badewannen mit einer bis in den Bereich des Wannenbodens reichenden, dicht schließenden Tür ist der Wegfall von separaten Dichtungen ein wesentlicher Vorteil. Weiterhin können in den Übergangsbereichen zu Wänden oder Verkleidungsteilen gleich die erforderlichen Einbaudichtlippen einstückig an der Gebrauchsschicht ausgebildet werden.

Die semiflexiblen Eigenschaften der Gebrauchsschicht in Verbindung mit den vorgeschlagenen Herstellungsverfahren ermöglichen weiterhin vorteilhaft die Realisierung von einstückig, nach Art so genannter Filmscharniere an der Gebrauchsschicht ausgebildetem beweglichen Zubehör, wie zum Beispiel Nackenstützen, Armauflagen oder Ähnliches. Die lösbare Fixierung derartig beweglicher Anbauteile sowie weitere externer beweglicher Zubehörteile, wie Duschköpfe, Ablagen, Griffe oder Sitzvorrichtungen kann auf Grund der semiflexiblen Eigenschaften der Gebrauchsschicht vorteilhaft durch an der Gebrauchsschicht ausgebildete Ausformungen in Form von Clipelementen oder Saugnäpfen realisiert werden.

Mit der erfindungsgemäßen Gebrauchsschicht können außerdem Sanitärgegenstände mit besonders angenehmen haptischen sowie rutschhemmenden und stoßdämpfenden Eigenschaften ausgestattet werden. Beim Füllen von Badewannen sowie beim Duschvorgang wirkt die semiflexible Gebrauchsschicht zusätzlich schallabsorbierend.

Durch die Ausbildung von unterschiedlichen Dickenbereichen in der Gebrauchsschicht können für einzelne Zonen unterschiedliche Elastizitätseigenschaften eingestellt werden. So können auf diese Weise außerdem in der Gebrauchsschicht Bedienbereiche durch die Ausbildung von Folientastaturelementen für die Steuerung bestimmter Vorgänge, wie Füllen, Sprudeln oder Massagefunktionen angeordnet werden. Ebenso ist auf diese Art die Steuerung von Beleuchtungsmitteln, insbesondere von in der transparenten Gebrauchsschicht integrierten Leuchtmitteln möglich. Bei der Verwendung von einem semiflexiblen PU-Klarguss-oder Sprühsystem für die Gebrauchsschicht können sogar gezielt optische Wirkungen durch die Ausbildung von Bereichen mit den Eigenschaften optischer Linsen oder Lichtleitern realisiert werden. Das Anordnen von Sensoren in oder hinter der Gebrauchsschicht ermöglicht eine Füllstandsüberwachung.

Die Verwendung eingefärbter semiflexibler PU-Guss- oder Sprühsysteme ermöglicht eine variable Farbgestaltung. Aber auch bei der Verwendung eines semiflexiblen PU-Klarguss- oder Sprühsystems ist eine große Variabilität in der Farbgebung gewährleistet. So können vor dem Aufbringen der PU-Tragschicht auf der Rückseite der transparenten Gebrauchsschicht eine oder mehrere Farbschichten oder graphische Abbildungen aufgebracht werden. Auch kann die PU-Tragschicht selbst eingefärbt sein.

Die Herstellung der Gebrauchsschicht durch Gießen oder Sprühen unter Vakuum ist besonders für das Erzielen einer klar-transparenten Gebrauchsschicht von Vorteil.

Das Erzeugen einer separaten Gebrauchsschicht nach den Ansprüchen 15 und 18 ermöglicht das nachträgliche Ausstatten vorhandener Sanitärkörper mit einer vorgefertigten Gebrauchsschicht. Diese Ausführungsform der Erfindung eignet sich besonders vorteilhaft für die Sanierung verschlissener Oberflächen an vorhandenen Sanitärgegenständen. Außerdem können vorhandene Sanitärgegenstände hinsichtlich der oben genannten Ausstattungsmerkmale aufgewertet werden.

### Ausführungsbeispiele

Ausführungsbeispiele der Erfindungen werden im Folgenden näher beschrieben:
Sanitärgegenstand

Als Beispiel für einen erfindungsgemäßen Sanitärgegenstand wurde im Ausführungsbeispiel eine Badewanne gewählt.

Es zeigen:
- Fig. 1: eine Badewanne im Querschnitt
- Fig. 2: den Längsschnitt einer Badewanne im Kopfbereich
- Fig. 3, 4: die perspektivische Darstellung einer Badewanne quer geschnitten
- Fig. 5: eine zweiteilig zusammengesetzte Badewanne quer geschnitten

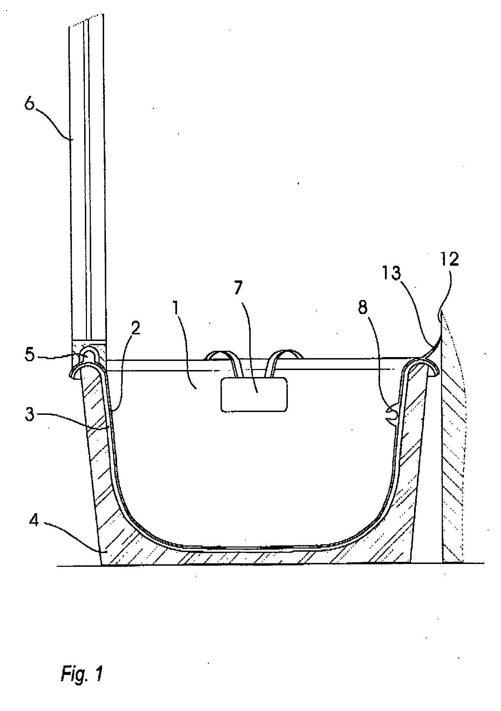

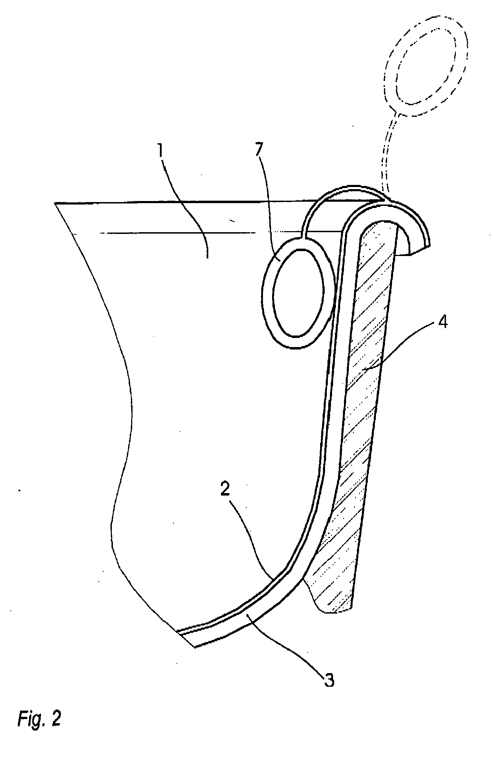

Gemäß der Erfindung weist eine Badewanne einen zweischichtigen Wannenkörper 1 aus Kunststoff auf (Fig. 1 und 2). Der Wannenkörper 1 besteht aus einer oberen Gebrauchsschicht 2 aus einem semiflexiblen PU-System mit so genannten selbstheilenden Eigenschaften. Unter der Gebrauchsschicht befindet sich die stoffschlüssig mit der Gebrauchsschicht 2 verbundene und aus einem reaktiven PU-System mit entsprechender Festigkeit bestehende Tragschicht 3. Der Wannenkörper 1 ist in bekannter Weise in einem Wannenträger 4 gelagert. In Fig. 1 weist der linke Wannenrand eine dichtende Führungswulst 5 auf, welche einstückig aus der semiflexiblen Gebrauchsschicht 2 ausgeformt ist. Entlang der Führungswulst 5 ist eine verschiebbare Duschabtrennung 6 aufgesetzt. Durch die semiflexiblen Eigenschaften der Gebrauchsschicht 2 und der Führungswulst 5 bedarf es dafür keiner zusätzlichen Dichtmaßnahmen.

Als ein Beispiel für das einstückige Ausbilden von teilbeweglichem Zubehör ist am Kopfende des Wannenkörpers 1 im Bereich seines Randes gelenkig ein Nackenpolster 7 angeordnet, welches nach der Art von flexiblen Filmscharnieren an der Gebrauchsschicht 2 angeformt ist. In Fig. 1 sind an der rechten Seite des Wannenkörpers 1 zwei Klippelemente 8 an der Gebrauchsschicht 2 einstückig angeformt. Daran können Gegenstände wie Duschköpfe, Duschschläuche, Ablagen oder Griffe lösbar befestigt werden.

Am rechten Rand des Wannenkörpers 1 (Fig. 1) ist eine ebenfalls flexible Einbaudichtlippe 13 angeformt, welche den Spalt zwischen Wannenkörper 1 und angrenzender Wand 12 dichtend überbrückt.

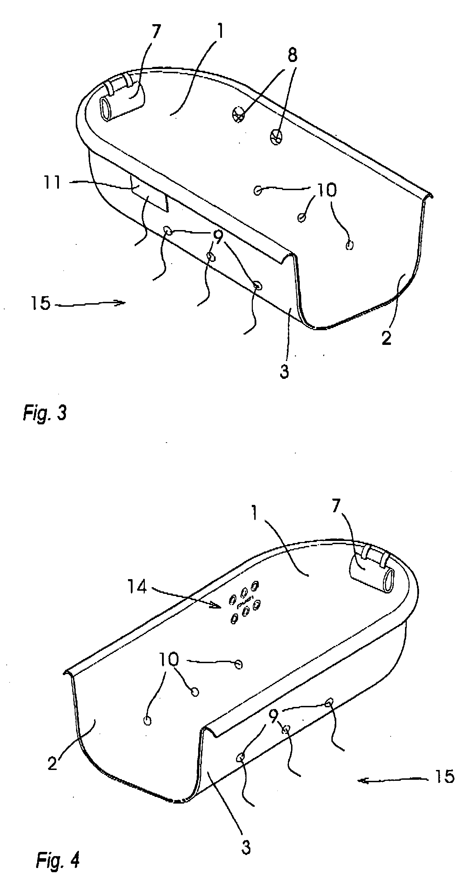

In den Figuren 3 und 4 weist der Wannenkörper 1 mit elektrischen Anschlusskabeln 15 versehene Leuchtmittel 9 auf, welche ihr Licht über in der Gebrauchsschicht 2 ausgebildete Lichtaustrittsflächen 10 in das Wanneninnere abgeben können. Zum Steuern der Leuchtmittel 9 sowie von nicht dargestelltem steuerbaren Ausstattungszubehör, wie zum Beispiel Massagedüsen, Zu- oder Ablaufarmaturen, Raumbeleuchtung, Klimatechnik oder Heimelektronik sind in der Gebrauchsschicht 2 nach der Art von Folientastaturen die zugehörigen Tastatur- und Anzeigeelemente 14 einstückig integriert. An der Außenseite des Wannenkörpers 1 befindet sich die zugehörige elektrische Tastatur- und Anzeigebaugruppe 11.

Im Ausführungsbeispiel nicht dargestellt ist die Möglichkeit, mehrere Lichtaustrittsfenster über ein gemeinsames Leuchtmittel zu beleuchten, wobei dazu an oder in der Gebrauchsschicht die entsprechenden Lichtleiterstrukturen ausgebildet sind bzw. direkt durch die Gebrauchsschicht gebildet werden. Weiterhin können die Lichtaustrittsfenster mit speziellen optischen Eigenschaften, zum Beispiel fokussierend oder diffundierend, ausgestattet sein.

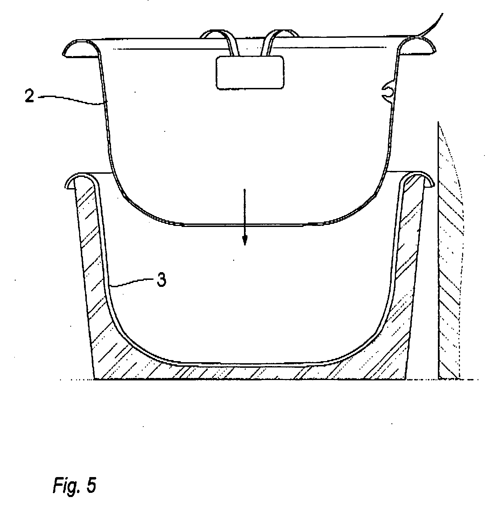

Bei dem in Fig. 5 dargestellten Ausführungsbeispiel wird die Gebrauchsschicht 2 als vorgefertigtes Bauteil nachträglich in eine vorhandene Badewanne eingesetzt. Die vorhandene Badewanne bildet dabei die Tragschicht 3. In dieser Ausführungsform können die Randbereiche der Gebrauchsschicht 2 so ausgebildet sein, dass die jeweiligen Ränder der vorhandenen Badewanne dichtend umgriffen werden.

### Verfahren

Die Herstellung eines erfindungsgemäßen Sanitärgegenstandes kann durch unterschiedliche Verfahren erfolgen.
Variante 1
   - Erzeugen der semiflexiblen Gebrauchsschicht durch Vergießen eines reaktiven PU-Systems in einer zweiteiligen Form
   - Einstellen eines Spaltes zwischen der gegossenen Gebrauchsschicht und der oberen Formhälfte
   - Erzeugen der Tragschicht durch Einbringen eines reaktiven PU-Systems in den Spalt zwischen der gegossenen Gebrauchsschicht und der oberen Formhälfte
Variante 2
   - Erzeugen der semiflexiblen Gebrauchsschicht durch Vergießen eines reaktiven PU-Systems in einer zweiteiligen Form
   - Entfernen der oberen Formhälfte
   - Erzeugen der Tragschicht durch Aufsprühen eines reaktiven PU-Systems
Variante 3
   - Erzeugen der semiflexiblen Gebrauchsschicht durch Aufsprühen eines reaktiven PU-Systems auf eine einteilige offene Form
   - Erzeugen der Tragschicht durch Aufsprühen eines reaktiven PU-Systems auf die gesprühte Gebrauchsschicht
Variante 4
   - Erzeugen der semiflexiblen Gebrauchsschicht durch Aufsprühen eines reaktiven PU-Systems auf eine einteilige offene Form
   - Aufsetzen einer zweiten Formhälfte unter Bildung eines Spaltes zwischen der Gebrauchsschicht und der zweiten Formhälfte
   - Erzeugen der Tragschicht durch Einbringen eines reaktiven PU-Systems in den Spalt zwischen Gebrauchsschicht und zweiter Formhälfte
Variante 5
   - Erzeugen der semiflexiblen Gebrauchsschicht als separates Formteil
   - Zusammenfügen dieses Formteils mit einem die separaten, die Tragschicht bildenden Formteil

Nach dem Erzeugen der Gebrauchsschicht 2 gemäß einer der vorstehenden Verfahrensvarianten kann ein Farbauftrag auf der Rückseite der Gebrauchsschicht 2 oder ein Bedrucken mit graphischen Motiven erfolgen.

Insbesondere beim Erzeugen einer klar-transparenten Gebrauchsschicht 2 ist es vorteilhaft, wenn das Gießen oder Aufsprühen des reaktiven PU-Systems unter Vakuum erfolgt.

### Bezugsseichenliste

- 1: Wannenkörper
- 2: Gebrauchsschicht
- 3: Tragschicht
- 4: Wannenträger
- 5: Führungswulst
- 6: Duschabtrennung
- 7: Nackenpolster
- 8: Klippelemente
- 9: Leuchtmittel
- 10: Lichtaustrittsflächen
- 11: Tastatur- und Anzeigebaugruppe
- 12: Wand
- 13: Einbaudichtlippe
- 14: Tastatur- und Anzeigeelemente
- 15: Anschlusskabel

## Patentansprüche

1. Sanitärgegenstand, insbesondere Badewanne, Duschbecken oder Waschtisch, mit einer Gebrauchsschicht und einer mit dieser verbundenen oder angelagerten Tragschicht, wobei mindestens die Gebrauchsschicht aus Kunststoff besteht, **dadurch gekennzeichnet, dass** die Gebrauchsschicht aus einem reaktiven, semiflexiblen, gieß- oder sprühfähigen PU-System besteht.

2. Sanitärgegenstand nach Anspruch 1, **dadurch gekennzeichnet, dass** die Gebrauchsschicht transparent ist.

3. Sanitärgegenstand nach Anspruch 1 oder 2, **dadurch gekennzeichnet, dass** die Gebrauchsschicht eingefärbt ist,

4. Sanitärgegenstand nach einem der Ansprüche 1 bis 3, **dadurch gekennzeichnet, dass** die Gebrauchsschicht selbstheilende Eigenschaften hat.

5. Sanitärgegenstand nach einem der Ansprüche 1 bis 4, **dadurch gekennzeiehnet, dass** an der Gebrauchsschicht bewegliche Zubehörbauteile einstückig gelenkig ausgebildet sind.

6. Sanitärgegenstand nach einem der Ansprüche 1 bis 5, **dadurch gekennzeichnet, dass** an der Gebrauchsschicht zum lösbaren Befestigen von Zubehörteilen flexible Rastelemente ausgebildet sind.

7. Sanitärgegenstand nach einem der Ansprüche 1 bis 6, **dadurch gekennzeichnet, dass** in der- Gebrauchsschicht Bedienelemente nach Art einer Folientastatur ausgebildet sind.

8. Sanitärgegenstand nach einem der Ansprüche 1 bis 7, **dadurch gekennzeichnet, dass** die Gebrauchsschicht Zonen mit unterschiedlichen Elastizitätseigenschaften aufweist.

9. Sanitärgegenstand nach einem der Ansprüche 1 bis 8, **dadurch gekennzeichnet, dass** in der Gebrauchsschicht Leuchtmittel integriert sind.

10. Sanitärgegenstand nach Anspruch 8, **dadurch gekennzeichnet, dass** in der Gebrauchsschicht mit Leuchtmitteln korrespondierende Bereiche ausgebildet sind, welche die Eigenschaften von optischen Linsen oder Lichtleitern aufweisen.

11. Sanitärgegenstand nach einem der Ansprüche 1 bis 10, **dadurch gekennzeichnet, dass** in der Gebrauchsschicht Dekoreinlagen angeordnet sind.

12. Sanitärgegenstand nach einem der Ansprüche 1 bis 11, **dadurch gekennzeichnet, dass** die Rückseite der Gebrauchsschicht mit einer Farb- oder Dekorschicht versehen ist.

13. Sanitärgegenstand nach einem der Ansprüche 1 bis 13, **dadurch gekennzeichnet, dass** die Gebrauchsschicht an den Übergangsbereichen zu angrenzenden Bauteilen einstückig Einbaudichtlippen oder Führungselemente aufweist.

14. Sanitärgegenstand nach einem der Ansprüche 1 bis 13, **dadurch gekennzeichnet, dass** die Tragschicht eingefärbt ist.

15. Sanitärgegenstand nach einem der Ansprüche 1 bis 14, **dadurch gekennzeichnet, dass** die Gebrauchsschicht und die Tragschicht aus zwei separat hergestellten Formteilen bestehen.

16. Verfahren zum Herstellen eines Sanitärgegenstandes gemäß einem der Ansprüche 1 bis 14, **dadurch gekennzeichnet, dass** die Gebrauchsschicht durch Vergießen eines reaktiven, semiflexiblen PU-Systems in einer zweiteiligen Negativform erfolgt und nach dem anschließenden Einstellen eines Spaltes zwischen der gegossenen Gebrauchsschicht und der oberen Formhälfte eine Tragschicht aus einem reaktivem PU-System in diesen Spalt eingebracht wird.

17. Verfahren zum Herstellen eines Sanitärgegenstandes nach einem der Ansprüche 15 bis 16, **dadurch gekennzeichnet, dass** nach dem Herstellen der Gebrauchsschicht und vor dem Herstellen der Tragschicht auf der Rückseite der Gebrauchsschicht ein Farbauftrag erfolgt.

18. verfahren zum Herstellen eines Sanitärgegenstandes gemäß einem der Ansprüche 1 bis 14, **dadurch gekennzeichnet, dass** die Gebrauchsschicht als separates Formteil durch Aufsprühen oder Vergießen eines reaktiven, semiflexiblen PU-Systems in einer offenen oder geschlossenen Form hergestellt wird und anschließend mit einem die Tragschicht bildenden Formteil zusammengefügt wird.
